# EUROPEAN PATENT APPLICATION

(11) **EP 1 903 803 A2**
(43) Date of publication of application: **26.03.2008**
(21) Application number: 07016092.4
(22) Date of filing: 16.08.2007
(51) Int. Cl.: H04N 7/26, H04N 7/36, H04N 7/46

(54) **Frame interpolating circuit, frame interpolating method, and display apparatus**

(30) Priority: 08.09.2006 JP 2006244558
(71) Applicant: Kabushiki Kaisha Toshiba, Minato-ku, Tokyo 105-8001 (JP)
(72) Inventor: Hirayama, Keiko, Tokyo 105-8001 (JP); Yamasaki, Masaya, Tokyo 105-8001 (JP); Sato, Ko, Tokyo 105-8001 (JP); Yoshimura, Hiroshi, Tokyo 105-8001 (JP); Hamakawa, Yohei, Tokyo 105-8001 (JP); Douniwa, Kenichi, Tokyo 105-8001 (JP); Ogawa, Yoshihiko, Tokyo 105-8001 (JP)
(74) Representative: HOFFMANN EITLE

(57) **Abstract**

According to one embodiment, there is provided a frame interpolating circuit including a detecting unit (12) which detects a first frame image (F1) and a second frame image (F2) from an input image signal (I₁) and compares both the images with each other to detect a motion vector, a comparing unit (13) which compares a size of the motion vector detected by the detecting unit with a predetermined value, and a generating unit (14) which, when the size of the motion vector detected by the detecting unit is not more than the predetermined value as a result of comparison by the comparing unit, generates and outputs an interpolated image (F3) between the first frame image and the second frame image on the basis of the detected motion vector and which, when the size of the motion vector is not less than the predetermined value as a result of comparison by the comparing unit, reduces the size of the detected motion vector and generates and outputs the interpolated image (F3) between the first frame image and the second frame image on the basis of the detected motion vector.

## Description

One embodiment of the invention relates to a frame interpolating circuit and a frame interpolating method which detect and use a motion vector, and a display apparatus using the frame interpolating circuit and the frame interpolating method.

In recent years, with development of a digital video technique, a demand for high image quality and high quality of a video has been high. In accordance with this, a frame interpolating process which generates and adds an interpolated image to each frame image of the video to more smoothly and naturally express motion of the video is known.

In the frame interpolating process, block motion vectors of an image are detected, and an interpolated image is generated depending on the degrees of motion of the motion vectors. However, when the sizes of the motion vectors are oversized, the image is broken. A technique for the oversized motion vector is also known.

Patent Document 1 (Jpn. Pat. Appln. KOKAI Publication No. 07-162811) discloses a technique for switching a current process to a fallback process when an oversized motion vector is generated to improve image quality.

However, according to the conventional art in Patent Document 1, a current process is switched to a unique process when a motion vector having a predetermined value or more is generated. However, a problem in which the technique does not necessarily compensate for continuous property is posed.

An object of the present invention is to provide a frame interpolating circuit, a frame interpolating method, and a display apparatus which prevent an interpolated image from being broken with respect not only to a small motion vector but also to a large motion vector.

One embodiment for achieving the object is a frame interpolating circuit comprising:
a detecting unit (12) which detects a first frame image (F1) and a second frame image (F2) serving as a frame image subsequent to the first frame image (F1) from an input image signal (I₁) and compares both the images with each other to detect a motion vector;
a comparing unit (13) which compares a size of the motion vector detected by the detecting unit with a predetermined value; and
a generating unit (14) which, when the size of the motion vector detected by the detecting unit is not more than the predetermined value as a result of comparison by the comparing unit, generates and outputs an interpolated image between the first frame image and the second frame image on the basis of the detected motion vector and which, when the size of the motion vector is not less than the predetermined value as a result of comparison by the comparing unit, reduces the size of the detected motion vector and generates and outputs the interpolated image between the first frame image and the second frame image on the basis of the detected motion vector.

In this manner, there are provided a frame interpolating circuit, a frame interpolating method, and a display apparatus which prevent an image from being broken with respect not only to a small motion vector but also to a large motion vector.

The invention can be more fully understood from the following detailed description when taken in conjunction with the accompanying drawings, in which:
FIG. 1 is a block diagram showing an example of a configuration of a frame interpolating circuit according to an embodiment of the present invention;
FIG. 2 is a block diagram showing an example of a configuration of a motion vector detecting unit of a frame interpolating circuit according to an embodiment of the present invention;
FIG. 3 is a diagram for explaining an example of a distribution of detected vectors of a frame interpolating circuit according to an embodiment of the present invention;
FIG. 4 is a flow chart showing an example of an interpolating process of a frame interpolating circuit according to an embodiment of the present invention; and
FIG. 5 is a block diagram showing an example of a configuration of a display apparatus including a frame interpolating circuit according to an embodiment of the present invention.

An embodiment of the present invention provides a frame interpolating circuit, a frame interpolating method, and a display apparatus which similarly prevent an interpolated image from being broken with respect not only to a small motion vector but also to a large motion vector.

One embodiment for achieving the object is a frame interpolating circuit comprising:
a detecting unit (12) which detects a first frame image (F1) and a second frame image (F2) serving as a frame image subsequent to the first frame image (F1) from an input image signal (I₁) and compares both the images with each other to detect a motion vector;
a comparing unit (13) which compares a size of the motion vector detected by the detecting unit with a predetermined value; and
a generating unit (14) which, when the size of the motion vector detected by the detecting unit is not more than the predetermined value as a result of comparison by the comparing unit, generates and outputs an interpolated image between the first frame image and the second frame image on the basis of the detected motion vector and which, when the size of the motion vector is not less than the predetermined value as a result of comparison by the comparing unit, reduces the size of the detected motion vector and generates and outputs the interpolated image between the first frame image and the second frame image on the basis of the detected motion vector.

In this manner, there are provided a frame interpolating circuit, a frame interpolating method, and a display apparatus which similarly prevent an interpolated image from being broken with respect not only to a small motion vector but also to a large motion vector.

The embodiment of the present invention will be described in detail below with reference to the accompanying drawings.

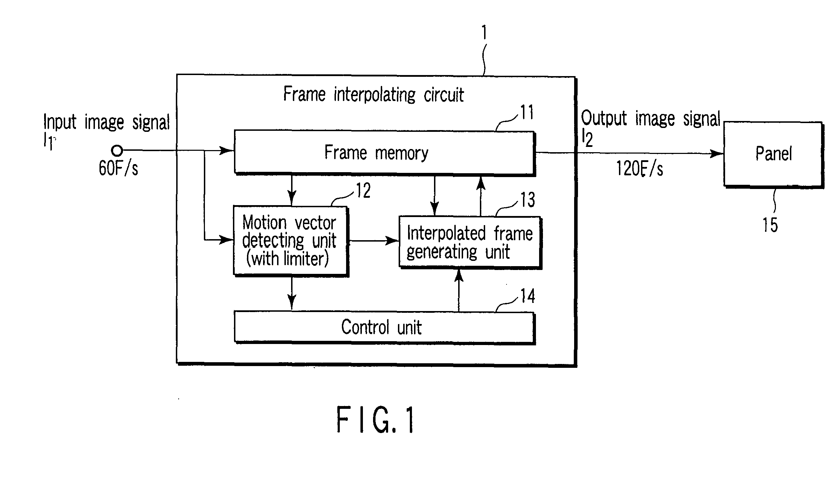

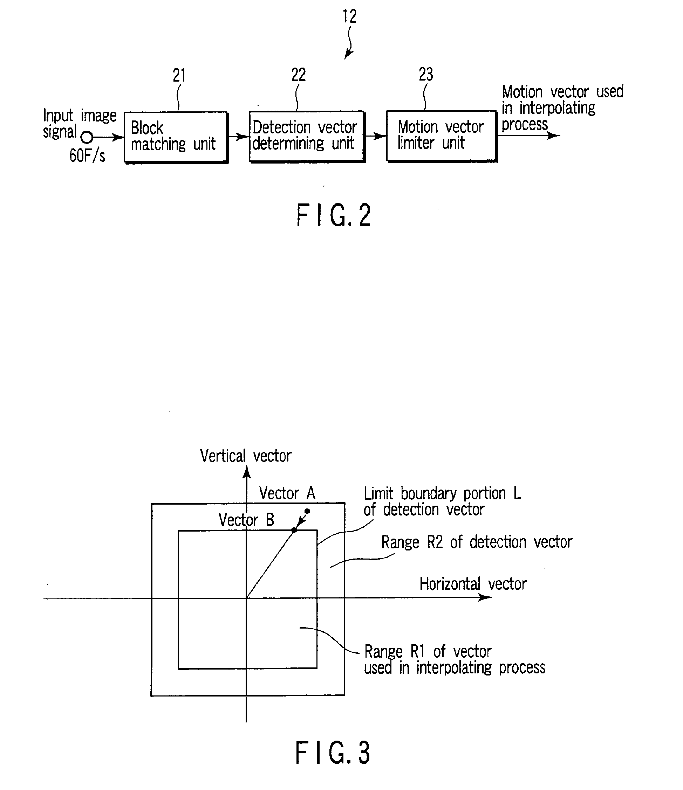

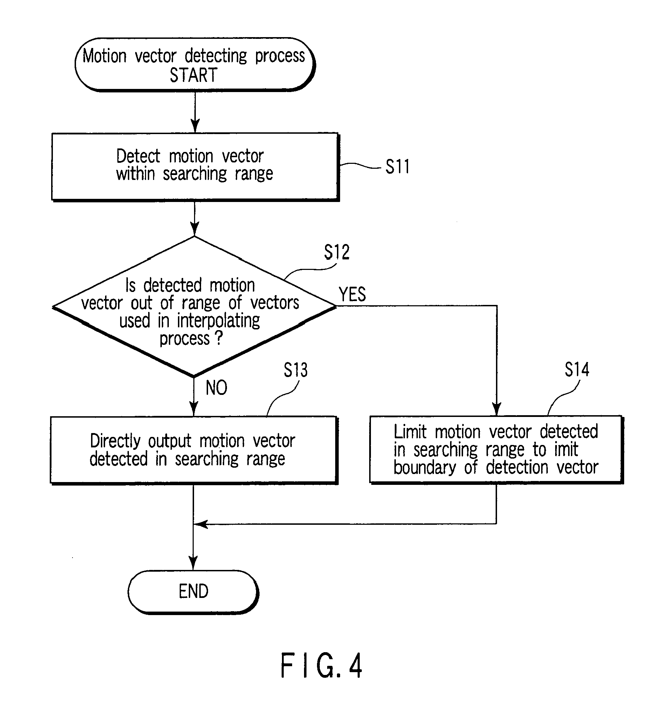

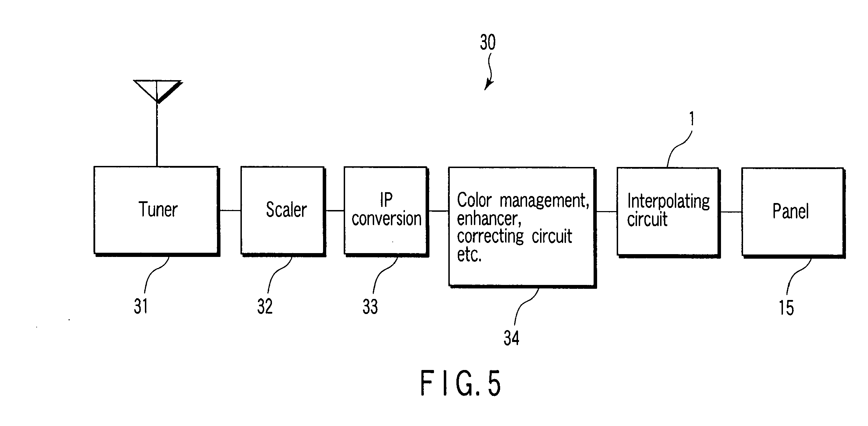

FIG. 1 is a block diagram showing an example of a configuration of a frame interpolating circuit according to an embodiment of the present invention. FIG. 2 is a block diagram showing an example of a configuration of a motion vector detecting unit of a frame interpolating circuit according to an embodiment of the present invention. FIG. 3 is a diagram for explaining an example of a distribution of detected vectors of a frame interpolating circuit according to an embodiment of the present invention. FIG. 4 is a flow chart showing an example of an interpolating process of a frame interpolating circuit according to an embodiment of the present invention. FIG. 5 is a block diagram showing an example of a configuration of a display apparatus including a frame interpolating circuit according to an embodiment of the present invention.

### <Frame Interpolating Circuit according to One Embodiment of the Present Invention>

### (Configuration)

First, an example of a frame interpolating circuit according to an embodiment of the present invention will be described below with reference to FIG. 1. A frame interpolating circuit 1, in FIG. 1, for example, has a frame memory 11 which receives an input image signal I₁ having 60 frames/second of RGB standards or YCbCr standards as an example and outputs an output image signal I₂ having 120 frames/second as an example, and a motion vector detecting unit 12 which compares pixel values of a past frame (F1) stored in the frame memory 11 and a present frame (F2) subsequent to the past frame (F1) to generate a motion vector by using symmetric searching, block matching, or the like. Furthermore, the frame interpolating circuit 1 has an interpolated frame generating unit 13 which generates an interpolated frame (F3) on the basis of the past frame (F1) and the present frame (F2) from the motion vector detecting unit 12 and the motion vector generated by the motion vector detecting unit 12, and a control unit 14 which controls an entire operation as will be described below.

The motion vector detecting unit 12, as shown in FIG. 2, has a block matching unit 21, a detection vector determining unit 22, and a motion vector limiter unit 23.

### (Breakdown by Oversized Motion Vector)

In the frame interpolating circuit 1, breakdown of an image caused by an oversized motion vector will be described below in detail with reference to FIG. 3. More specifically, a conventional motion vector detecting unit, as shown in FIG. 3, can detect a motion vector in a range R2 for a detection vector. For example, a motion vector such as a vector A can be detected. However, when a vector having a large size is detected in such a wide searching range R2, erroneous detection causes a large difference in vector values. Since a finally obtained interpolated frame (F3) may include a large error, an object shown in a video image displayed on a panel or the like is broken, and the video image itself may be broken.

In contrast to this, as will be described later, the size of a motion vector to be output is limited to a vector having a size falling within the range of a limit boundary portion L of the detection vector in FIG. 3, for example, a vector B, to prevent the video image from being broken.

### (Operation)

A motion vector detecting process to prevent an image from being broken by an oversized motion vector will be described in detail with reference to the flow chart in FIG. 4. Steps in the flow charts in FIGS. 4 can be replaced with circuit blocks, respectively. Therefore, all the steps in the flow charts can be redefined as blocks, respectively.

By the operations of the control unit 14, the block matching unit 21 and the detection vector determining unit 22 of the motion vector detecting unit 12, a motion vector is detected in the range R2 of the detection vector in FIG. 3 (step S11). The control unit 14 and the motion vector limiter unit 23 of the motion vector detecting unit 12 determine whether the detected motion vector is larger than a range R1 of a vector which can be used in an interpolating process without causing breakdown of a video image (step S12).

When it is determined that the detected motion vector is included in the range R1 of a vector which can be used in the interpolating process without causing breakdown of a video image, the motion vector detected in a searching ranged is directly output to the interpolated frame generating unit 13 (step S13).

When it is determined that the detected motion vector is larger than the range R1 of the vector which can be used in an interpolating process without causing breakdown of a video image, a motion vector detected in the searching range is limited to a limit boundary portion L (step S14). More specifically, a size of the motion vector is reduced to the limit boundary portion L (predetermined value), and the motion vector is output to the interpolated frame generating unit 13 (step S14). (In this case, vector range R1 = limit boundary L or vector range R1 > limit boundary L can be established.)

As a result, the interpolated frame generating unit 13 receives a motion vector having a size which can be used in the interpolating process without causing breakdown of a video image. Therefore, the interpolated image (F3) is generated from the proper motion vector and an input image signal (I₁) on the basis of the past frame image (F1) and the present frame image (F2), and the past frame image (F1), the interpolated image (F3), and the present frame image (F2) are output to the subsequent part in the order named. In this manner, even though a video image includes large motion, for example, a smooth and natural video image free from breakdown can be displayed on a panel display unit.

### <Panel Display Apparatus using Frame Interpolating Circuit according to One Embodiment of the Present Invention>

An example of a panel display apparatus using the frame interpolating circuit will be described in detail with reference to FIG. 5.

The panel display apparatus 30 using the frame interpolating circuit 1 has, an example, a tuner unit 31 which outputs a broadcast signal as a video signal, a scaler 32 which performs a scaling process for the video signal, an IP converting unit 33 which performs IP conversion to the video signal, a processing unit 34 including color management, enhancer, and correcting circuits and the like, the frame interpolating circuit 1 described above, and a panel unit 15 such as a liquid crystal display unit or an FPD (Flat Panel Display) which receives an output from the frame interpolating circuit 1.

As described above, the panel display apparatus 30 having such a configuration can display a smooth and natural video image by using an interpolated frame free from a broken video image, even if there occurs a large motion in the video image.

According to the various embodiments described above, a person skilled in the art can realize the present invention. Furthermore, the person skilled in the art can easily conceive of various modifications of the embodiments and can apply the present invention to various embodiments without inventive ability. Therefore, the present invention covers wide ranges consistent with the disclosed principle and the novel characteristics, and is not limited to the embodiments described above.

## Claims

1. A frame interpolating circuit **characterized by** comprising:
a detecting unit (12) which detects a first frame image (F1) and a second frame image (F2) serving as a frame image subsequent to the first frame image (F1) from an input image signal (I₁) and compares both the images with each other to detect a motion vector;
a comparing unit (13) which compares a size of the motion vector detected by the detecting unit with a predetermined value; and
a generating unit (14) which, when the size of the motion vector detected by the detecting unit is not more than the predetermined value as a result of comparison by the comparing unit, generates and outputs an interpolated image (F3) between the first frame image and the second frame image on the basis of the detected motion vector and which, when the size of the motion vector is not less than the predetermined value as a result of comparison by the comparing unit, reduces the size of the detected motion vector and generates and outputs the interpolated image (F3) between the first frame image and the second frame image on the basis of the detected motion vector.

2. The frame interpolating circuit according to claim 1, **characterized in that** the detecting unit performs block matching between the first frame image and the second frame image to detect the motion vector.

3. The frame interpolating circuit according to claim 1, **characterized in that** the input image signal is of one of RGB and YCbCr standards.

4. A frame interpolating method **characterized by** comprising:
detecting a first frame image (F1) and a second frame image (F2) serving as a frame image subsequent to the first frame image (F1) from an input image signal (I₁) and comparing both the images with each other to detect a motion vector;
comparing a size of the detected motion vector with a predetermined value;
when the size of the detected motion vector is not more than the predetermined value as a result of comparison, generating and outputting an interpolated image between the first frame image and the second frame image on the basis of the detected motion vector; and
when the size of the motion vector is not less than the predetermined value as a result of comparison, reducing the size of the detected motion vector and generating and outputting the interpolated image between the first frame image and the second frame image on the basis of the detected motion vector.

5. The frame interpolating method according to claim 4, **characterized in that** block matching between the first frame image and the second frame image is performed to detect the motion vector.

6. The frame interpolating method according to claim 4, **characterized in that** the input image signal is of one of RGB and YCbCr standards.

7. A display apparatus **characterized by** comprising:
a detecting unit (12) which detects a first frame image (F1) and a second frame image (F2) serving as a frame image subsequent to the first frame image (F1) from an input image signal (I₁) and compares both the images with each other to detect a motion vector;
a comparing unit (13) which compares a size of the motion vector detected by the detecting unit with a predetermined value;
a generating unit (14) which, when the size of the motion vector detected by the detecting unit is not more than the predetermined value as a result of comparison by the comparing unit, generates and outputs an interpolated image (F3) between the first frame image and the second frame image on the basis of the detected motion vector and which, when the size of the motion vector is not less than the predetermined value as a result of comparison by the comparing unit, reduces the size of the detected motion vector and generates and outputs the interpolated image (F3) between the first frame image and the second frame image on the basis of the detected motion vector; and
a panel unit (16) which displays the first and second frame images (Fl, F2) and the interpolated image (F3) on a screen.

8. The display apparatus according to claim 7, **characterized in that** block matching between the first frame image and the second frame image is performed to detect the motion vector.
